# EUROPEAN PATENT APPLICATION

(11) **EP 4 101 820 A1**
(43) Date of publication of application: **14.12.2022**
(21) Application number: 21178293.3
(22) Date of filing: 08.06.2021
(51) Int. Cl.: C03C 8/24, C03C 27/02, C23D 5/00

(54) **IMPROVED GLASS-TO-METAL SEAL**

(71) Applicant: TE Connectivity Sensors Germany GmbH, 44227 Dortmund (DE)
(72) Inventor: Sirtl, Horst, 44227 Dortmund (DE); Roessinger, Stefan Andreas, 44227 Dortmund (DE)
(74) Representative: Grünecker Patent- und Rechtsanwälte PartG mbB

(57) **Abstract**

The invention relates to an assembly (1) comprising a metal member (3) and a glass member (5) bonded to the metal member (3) in a glass-to-metal seal (7). The invention further relates to a glass-covered assembly, an electrical device and to a method for producing a glass-to-metal seal. In order to improve the bond between the metal member (3) and the glass member (5), the metal member (3) contains at least one glass-forming component (11).

## Description

The invention relates to an assembly comprising a metal member and a glass member bonded to the metal member in a glass-to-metal seal. The invention further relates to a glass covered assembly comprising at least one electrically conductive connection member, to an electrical device comprising at least one temperature dependent resistive element and to a method for producing a glass-to-metal seal.

Glass-to-metal seals are known in the art. A glass-to-metal seal is formed by a metal member and a glass member which are bonded to each other, in particular, chemically bonded. Glass-to-metal seals are used for different purposes. They are, just by way of example, used when a wire is led through a glass element, such as a light bulb, in order to connect an element in the interior of the glass element to the outside. Another example for a glass-to-metal seal is a glass member covering a metal member, e.g. a wire, which is covered partly by the glass member for protection. Furthermore, the glass member can be used to mechanically fixate the wire to an additional element.

If the bond between glass and metal is insufficient, the bond may suffer from mechanical or thermal stress and, in the worst case, break. Thermal stress for a glass-to-metal seal may be induced by temperature changes, in particular fast temperature changes or changes over a wide temperature range. Mechanical stress may be induced by vibrations, tensile forces or other.

It is therefore the object of the invention to provide an assembly with a glass-to-metal seal having an improved structural integrity, in particular with regard to thermal and/or mechanical stress.

For the assembly of the aforementioned type, this object is achieved by a metal member that contains at least one glass-forming component.

For the glass-covered assembly, this object is achieved in that the glass-covered assembly comprises at least one assembly with a glass-to-metal seal, according to the invention, and in that the metal member of the at least one assembly is mechanically and electrically connected to the at least one electrically conductive connection member at an interface region, and wherein the metal member is covered by the glass member of the at least one assembly at least in the interface region.

For the electrical device containing at least one temperature dependent resistive element, this object is achieved in that the temperature dependent resistive element is directly or indirectly connected to an electrically conductive connection member in an electrically conductive manner, wherein at least one metal member is mechanically and electrically connected to the connection member, the metal member containing at least one glass-forming component and being part of a glass-to-metal seal, with a glass member that covers the metal member and the connection member at least in parts, wherein the metal member and the glass member are part of an assembly according to the invention.

For the method for producing a glass-to-metal seal, this object is achieved by the steps of providing a metal member containing glass-forming components and depositing the glass melt on the metal member, thereby forming a chemical bond between the glass-forming components in the metal member and the glass member, wherein the glass member is formed from the glass melt.

Due to the glass-forming components in the metal member, the glass-to-metal seal may be improved, at least with respect to the structural integrity.

The glass-forming components may form glass in the metal member, at least in surface-near regions thereof. Said glass may be present as glass matrices or glass networks in the metal member. The glass may be formed when the glass-forming components react chemically with each other and/or with other elements, in particular with oxygen from outside the metal member. In general, surface-near glass-forming components in the metal member may easily oxidize with oxygen from the ambient atmosphere and thereby form glass. This glass being present on the surface and in surface-near regions of the metal member can easily be bonded with the glass from the glass member. This bonding may be chemical bonding. This chemical bonding may, in particular, occur when the glass of the glass member is present as glass melt during production. The glass in the metal member produced from the glass-forming components may form continuous glass networks with the glass in the glass member. These common glass networks may form a strong bond between the glass member and the metal member.

To summarize, the invention allows to form a strong connection between the glass member and the metal member.

The glass formed from oxidized glass-forming components is typically electrically insulating. However, since an electrically conductive connection between the metal member and the glass member is not intended, this is not a drawback.

It is, just by way of example, known to use oxidized nickel for metal members that are to be covered with glass. However, nickel is not a glass-forming component as nickel oxide is not a glass. The oxidized nickel is sometimes used to improve the wettability of the metal member before the glass member is deposited there on. However, this is to be distinguished from the invention, in which glass-forming components are used to form glass in the metal member that is then chemically bonded to the glass member.

In the following, further improvements of the invention are described. The additional improvements may be combined independently of each other, depending on whether a particular advantage of a particular improvement is needed in a specific application.

The improvements described with respect to the assemblies and their advantages also relate to the method according to the invention. Likewise, the improvements and the advantages mentioned with respect to the method also apply to the assemblies according to the invention. In other words, the method according to the invention is preferably used for producing assemblies according to the invention.

In order to form the bond between the glass member and the metal member in the assembly in a simple way, the glass member is preferably deposited from glass melt on the metal member. When the glass melt cools down, or, in other words, anneals, a solid glass member is formed.

Another preferred method for building the glass member is to apply a mixture of glass and/or ceramic powders with an organic binder agent to provide a dispensable paste, which is applied to the metal member and being transformed with temperature treatment into a glass member or glass ceramic or a glass composite which is representing later the glass member.

Further, the glass member can be produced by having a glass preform and then heat up said glass preform together with the metal body in place above meting point of the glass material. After cooling down, the final solid glass member is formed. In all mentioned option next to the glass and metal members, also a third material type, e.g. ceramics, can be incorporated to this seal.

The metal member is preferably part of an electrical conductor, in particular, as part of an electrical connection element. The metal member may, in particular, be part of an electrical connection element such as a contact pad. The metal member may be identical with the electrical connection element or may be electrically connected to the same.

According to another advantageous improvement of the assembly, the at least one glass-forming component contains at least one of the following elements: silicon, germanium, phosphor, boron, arsenic, antimony. The at least one glass-forming component preferably consists of one of these elements. However, also a combination of different of the aforementioned elements are possible. In addition, the glass-forming components may further comprise additional elements which are not listed here.

Additional to the glass forming components, also materials known as glass stabilizers may be added, for example, but not limited to, calcium, strontium, barium, iron, manganese, zirconium and aluminum, if it is not the main material of the metal member.

According to another advantageous improvement, the glass-forming components and the material for the glass member are chosen, in order to provide similar elements in the glass member and in the glass-forming components. Hence, a chemical bond between the glass member and the glass-forming components may, firstly, be easier to be achieved and may, secondly, form a particular stable bond between the glass member and the metal member. If, just by way of example, the glass member contains silicate, the glass-forming components in the metal member preferably contain silicon. Said silicon may get oxidized and form silicate which can easily bond to the silicate from the glass member.

In order to improve the bond between the glass member and the metal member produced by the glass-forming components, a concentration of the glass-forming component in the metal member is preferably higher than 0,4 % at least in a region of the metal member. This minimum concentration is preferably present in a region of the metal member that is close to the glass member. More preferably, the concentration is at least 4 %.

The glass-forming components in the metal member are preferably intentionally added to the metal member and are not traces from the base materials from which the metal member is made or contaminants from the production process of the metal member. In other words, the glass-forming components are not simply traces in the metal member.

A concentration of the at least one glass-forming component in the metal member may increase towards a transition region between the metal member and the glass member. Hence, the highest concentration of glass-forming components is preferably present in the region where they are needed to form the bond with the glass member. Other regions do not necessarily need to be provided with a large amount of glass-forming components. In addition, other regions of the metal member may also contain no glass-forming components. However, for a simple production of the metal member, the metal member may be provided with an even distribution of the glass-forming components.

The concentration of the at least one glass-forming component in the metal member preferably increases from a central region or core region of the metal member towards the aforementioned transition region. The concentration may increase continuously towards the transition region. In the alternative, the metal member may have a step in the concentration of the glass-forming components. For example, the metal member may have a shell region with a concentration of glass-forming components being higher than 0,4% and an inner region with a concentration of glass-forming components being lower than 0,4%. The inner region may be the same as the aforementioned core region or central region.

In the alternative, an inner region which constitutes the majority of the metal member may have a concentration of glass-forming components lower than 0,4 %, whereas the shell region constitutes only a small part of the metal member and has a concentration of glass-forming components being higher than 0,4 %.

Preferably, the glass-forming components are provided in the material of the metal member. In other words, the material of the metal member comprises metal as a main constituent. Said metal may be mixed with the glass-forming components. In the alternative, the glass-forming components may be present as part of a coating on the metal member, in particular a dispersive coating. The glass-forming components may be present as particles or inside capsules in said coating. During the deposition of the glass member, the dispersive coating or at least the glass-forming components therein may melt and get distributed on and/or in the metal member.

According to another advantageous improvement, a major constituent of the at least one metal member is at least one of the following: nickel, silver, platinum, aluminum, palladium, rhodium or iridium. However, the metal member is not limited to these materials. Also, other materials such as gold, copper or other, or alloys containing any composition of two or more of the aforementioned materials are possible.

According to another preferred embodiment of the assembly, the at least one metal member is a wire, in particular a lead wire. Just by way of example, the at least one metal member may be a lead wire for a resistance thermometer or a thermistor. The glass member may be present on the lead wire, in order to fixate the lead wire on another part of the thermometer or a thermistor. Thereby, a pullout force for pulling out the lead wire may be increased. Hence, the structural integrity is improved. In addition, the glass member may protect the lead wire from the environment. The shape of the aforementioned lead wire providing the metal member is not limited to circular geometries. It could be square, rectangular, polygonal or even irregular.

A coefficient of thermal expansion (CTE) of the glass member may differ from a coefficient of thermal expansion of the metal member, for example by more than 10 %. This is advantageous because the matching of the coefficients of thermal expansion may be omitted. It is often required to match the coefficients of thermal expansion of the glass member and the metal member, in order to avoid the breaking of the bond between these members during temperature changes. However, said matching of the coefficients has drawbacks. Matching is usually achieved by mixing the materials of the glass member and/or the metal member with additional materials, in order to change their CTE. At least for a resistance thermometer that is provided with a platinum measuring structure, it is, however, a known problem that these additional materials may alter the properties of the measuring structure and induce a sensor drift. The invention overcomes this problem because matching of the coefficients of thermal expansion may be omitted. The bond between the glass member and the metal member is, due to the glass-forming components, strong enough that said matching may be unnecessary.

Another benefit with regard to the coefficient of thermal expansion is that the at least one glass-forming component in the metal member may alter the response of the metal member to temperature changes. If, for example, the metal member is made from a ferromagnetic material, such as nickel, the material usually has an anomaly in the CTE around the Curie temperature (Curie point), at which the material loses its ferromagnetic properties. This anomaly leads to rapid changes in the expansion and may compromise the structural integrity of the bond between the metal member and the glass member. However, the addition of the glass-forming component may turn the material of the metal member into a paramagnetic material even below the Curie point. Hence, the anomaly in CTE may be eliminated or at least reduced and does not constitute a risk to the structural integrity of the bond between the glass member and the metal member anymore.

The glass covered assembly may further be improved, in that the at least one electrically conductive connection member is a contact pad, a conductor or a contact element, in particular a contact pad, a conductor or a contact element that is electrically connected to a measuring structure of a resistance thermometer. The metal member is preferably mechanically and electrically connected to the connection member by at least one solder joint or weld joint or a connection made by a bonding technology like ultrasonic bonding, but not limited to. Preferably, both, the metal member and the connection member are covered by the glass member, at least in parts. Thereby, the glass member may fixate the metal member on the connection member, in addition to the solder joint or weld joint. Thereby, the mechanical connection between the metal member and the connection member may be improved.

The electrical device according to the invention is preferably a temperature sensor, a resistance thermometer or a thermistor, used for building a thermometer later.

The method for producing a glass-to-metal seal may be improved, in that the glass member is formed from the glass melt by annealing the glass melt. In other words, the glass melt cools down and forms the glass member. Just by way of example, the glass melt may be heated up to a temperature around 800 °C and may be deposited with a temperature between 700 and 800 °C. The temperatures needed for the application of the glass member will vary by their glass compositions and should not limit the example. Also a preferred method to build the glass member is to apply a mixture of glass and/or ceramic powders with an organic binder agent to provide a dispensable paste, which is applied to the metal member and being transformed with temperature treatment into a glass member or glass ceramic or a glass composite which is representing later the glass member.

The glass-forming components in the metal member may oxidize and form glass matrices or glass networks in the metal member. This oxidizing process may happen before the deposition of the glass member. However, the process preferably happens during or after depositing the glass melt, due to the temperature of the glass melt. When the metal member is heated by the glass melt, oxygen may diffuse into the metal member, at least into its surface regions and oxidize the glass-forming components therein.

Instead of or additional to using the heat of the glass melt, the metal member may be thermally treated or, in other words, heated before or during the deposition of the glass melt. Thereby, the oxidation rate of the glass-forming components in the metal member may be increased.

The method may further comprise the step of first providing a metal body that is free from glass-forming components with the at least one glass-forming component to form the metal member before the glass-to-metal seal is produced. For example, the glass-forming component may be provided in a dispersive coating or another coating.

An additional thermal treatment may also be part of the method, in order to allow the glass-forming components from a coating to evenly distribute on the metal member or to diffuse into the metal member, at least into its surface regions.

In the alternative, the glass-forming components may be present in a sheath or shell that is basically made from metal and is provided with the glass-forming components. Said sheath may also be arranged on a metal body that is free from glass-forming components, in order to produce a metal member that comprises the glass-forming components. Here also, thermal treatment may be part of the method, for example, in order to improve the connection between the sheath or shell and the metal body in order to form the metal member.

Forming a mechanical and electrical connection between the metal member and an electrically conductive connection member by welding or soldering or by applying a bonding technology before the glass-to-metal-seal is produced, may also be part of the method.

In the following, the invention and its improvements are described in greater detail, using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig. 1: shows a simple sketch, depicting an assembly according to the invention in a cross-sectional view, the assembly comprising a glass member and a metal member;
- Fig. 2: shows an assembly according to the invention as part of a glass covered assembly and also part of an electrical device in a cross-sectional view; and
- Figs. 3 and 4: show examples for the distribution of the glass-forming components in the metal member in cross-sectional views.

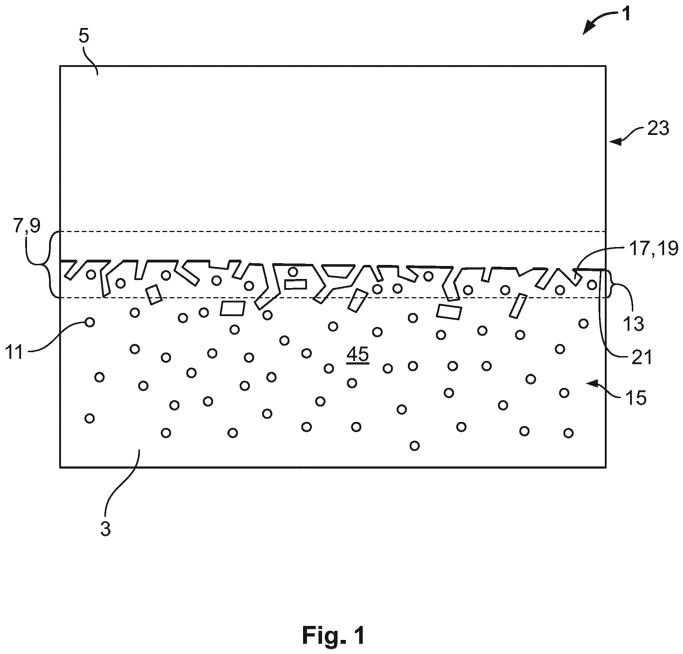

In the following, a simple embodiment of an assembly 1 is described with respect to Fig. 1. The figure is not true to scale and serves only for explanatory reasons.

The assembly 1 comprises a metal member 3 and a glass member 5. The glass member 5 is bonded to the metal member 3 in a glass-to-metal seal 7. The glass to metal seal 7 is depicted as an interface region 9 and indicated by the chain line in Fig. 1.

The main constituent of the metal member 3 is a metal, in particular at least one of the following: Nickel, silver, platinum, rhodium, iridium, palladium, aluminum, copper, gold, or an alloy containing any composition of the aforementioned materials. The main constituent of the glass member 5 is glass. Just by way of example, the glass member 5 may predominantly contain a silicate or a borosilicate.

The metal member 3 comprises glass-forming components 11. The glass-forming components 11 are indicated as circles in Fig.1. The glass-forming components 11 preferably contain or consist of one of the following: silicon, germanium, phosphor, boron, arsenic, antimony.

Additional to the glass forming components, also materials known as glass stabilizers may be added, for example but not limited to calcium, strontium, barium, iron, manganese, zirconium and aluminum, if it is not the main material of the metal member.

The material of the glass member 5 and the glass-forming components 11 are preferably chosen to fit to each other. In other words, if the glass member 5 predominantly contains a silicate, the glass-forming components 11 preferably contain silicon.

A concentration of the glass-forming components 11 in the metal member 3 is preferably higher than 0,4 %, more preferably higher than 4 %. In other words, the glass-forming components 11 are intentionally added to the material of the metal member 3 and are not only traces in the material of the metal member 3.

Preferably, the aforementioned concentration at least exists in the surface-near regions 13 of the metal member, in particular in the surface-near regions 13 of the metal member 3 that are part of the transition region 9, in which the metal member 3 and the glass member 5 are in contact with each other.

Just by way of example, Fig. 1 shows the glass-forming components 11 as being evenly distributed in the metal member 3. However, this is not mandatory. In the alternative to evenly distributed glass-forming components 11, the concentration of the glass-forming components 11 may increase towards the transition region 9.

In particular, the concentration may increase from an inner region 15 towards the transition region 9. If the metal member 3 is bonded to the glass member 5 on several sides, the concentration may increase from a central region or core region 45 towards the transition region 9. This may, in particular, be the case when the metal member 3 has a circular cross section and the glass member 5 is bonded to the metal member 3 on at least a section of its outer circumference. The circular cross section of the metal member 3 is not a limitation and used hereby only for explanatory reasons.

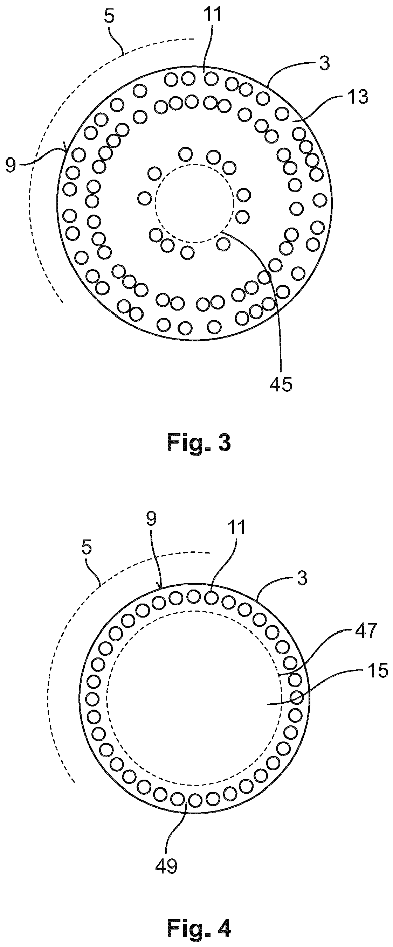

Alternative distributions of the glass-forming components 11 in the metal member 3 are described later on with respect to Figs. 3 and 4.

Due to the glass-forming components 11 in the metal member 3, the metal member 3 contains glass 17 which may be present in the form of glass networks or glass matrices 19 in the material of the metal member 3, at least in its surface-near regions 13.

The glass matrices 19 are indicated as rectangular structures in Fig.1. However, this is for illustration only. The glass matrices 19 may have any other shape and may also be interconnected with each other.

The glass matrices 19 are formed from oxidized glass-forming components 11 in the metal member 3. Hence, the majority of the glass matrices 19 is present in the surface-near regions 13, where the glass forming components 11 may have easier contact with oxides from the ambient atmosphere.

The glass matrices 19 which extend to the surface 21 of the metal member 3 are in direct contact with the glass member 5. Hence, these matrices 19 may form chemical bonds with the material of the glass member 5.

Thereby, a continuous glass structure 23 is formed from the glass member 5 and the glass matrices 19. Said continuous glass structure 23 extends into the metal member 3, at least into its surface-near regions 13. Thereby, a strong mechanical connection between the glass member 5 and the metal member 3 is achieved.

The strong bond between the glass member 5 and the metal member 3 may allow omitting the matching of the coefficients of thermal expansion (CTE) of the glass member 5 and the metal member 3.

The bond between the glass member 5 and the metal member 3 is strong enough to keep the members 5 and 3 bonded even when temperature changes lead to different expansions of the members 5 and 3. Omitting the matching of the CTE eliminates the risk of contaminating the members 5 and 3 with elements that may reduce the function of the assembly and lead to failures.

The glass member 5 is preferably formed by depositing glass melt 44 onto the metal member 3. The molten glass may form chemical bonds with the glass 17 in the metal member 3 formed by the oxidized glass-forming components 11.

Another preferred method to build the glass member 5 is to apply a mixture of glass and/or ceramic powders with an organic binder agent to provide a dispensable paste, which is applied on the metal member 3, evenly covering the electrically conductive connection member 31 and being transformed with temperature treatment into a glass member 5 or glass ceramic or a glass composite, which is later representing the glass member 5.

Further, a preform of the glass material can be joined with the metal member 3, evenly covering the electrically conductive connection member 31 and being transformed with temperature treatment into a glass member 5 or glass ceramic or a glass composite, which is representing later the glass member 5.

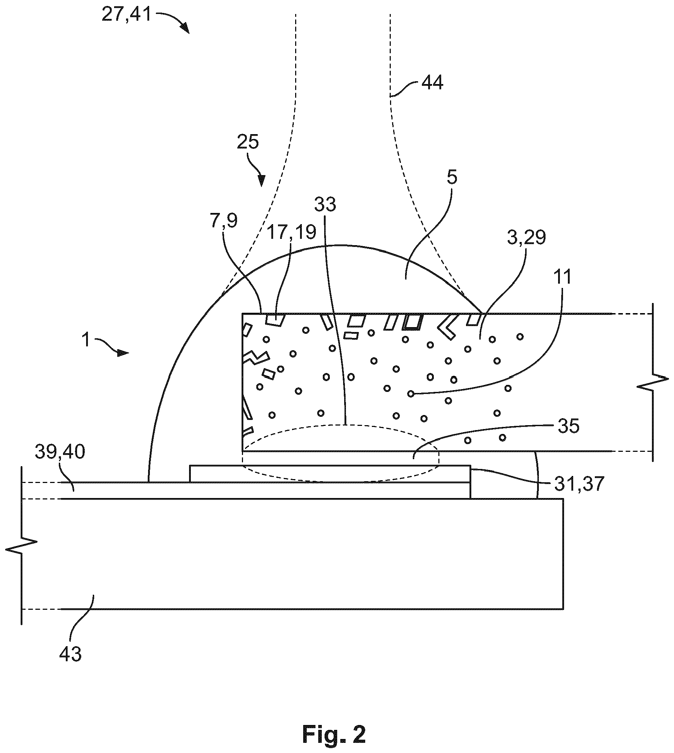

In the following, a preferred application of an assembly 1 according to the invention, in particular an assembly 1 of the aforementioned type is described with respect to Fig. 2.

Fig. 2 shows an assembly 1 with a glass-to-metal seal 7 as part of a glass covered assembly 25, which itself is part of an electrical device 27.

Just for explanatory reasons, the electrical device 27 is described as a temperature sensor element 41, which can be used as part of a thermometer assembly, such as a resistance thermometer.

The metal member 3 is preferably a lead wire 29. Said lead wire 29 is electrically and mechanically connected to an electrically conductive connection member 31, at least at an interface region 33. In the interface region 33, the metal member 3 and the connection member 31 are connected via a mechanical and electrical connection 35.

The mechanical and electrical connection 35 is preferably a material joint 35, in particular a solder joint, a weld joint or a wire bond joint. The material joint 35 is depicted as an intermediate layer between the metal member 3 and the connection member 31, for explanatory reasons only.

Just by way of example, the connection member 31 is a contact pad 37 that serves to electrically connect a temperature dependent resistive element 39 with the lead wire 29. The temperature dependent resistive element 39 may in particular be part of a platinum measuring structure 40 of a temperature sensor element 41. The contact pad 37 is formed as at least one conductive layer arranged on the element 39 to provide a conductive connection between the measuring structure 40 and the lead wire 29 and the material joint 35.

A common substrate 43 serves to carry and stabilize the element 39 and the contact pad 37. The substrate 43 may be made from a ceramic material, in particular aluminum oxide.

As mentioned before, the metal member 3 is connected to the contact pad 37. Said contact pad 37 is electrically and mechanically connected to the element 39.

In order to increase the structural integrity of the electrical device 27 and to further fixate the lead wire 29 thereto, the glass member 5 is provided and bonded to the lead wire 3.

The glass member 5 covers the metallic member 3, represented by the lead wire 29, in a region that also comprises the interface region 33. Thereby, the material joint 35 between the lead wire 3 and the contact pad 37 is protected. Furthermore, the glass member 5 also covers the contact pad 37 and thereby protects the contact pad 37.

Finally, the glass member 5 is preferably also in contact with the element 39 and the substrate 43. The glass member 5 thereby serves to fixate the lead wire 29 to the remaining electrical device 27. Due to the bond between the glass member 5 and the lead wire 29, which represents the metal member 3, the lead wire 29 is mechanically fixated by the glass member 5. Hence, a pull out force that needs to be overcome to remove the lead wire 29 from the electrical device 27 is increased.

The cross-sectional shape of the mentioned lead wire (29) providing the metal member (3) in Figs. 3 and 4 is not limited to circular geometries. It could be square, rectangular, polygonal or even irregular. Even the wire shape in longitudinal section depicted in figs. 1 and 2 as rectangular are not limited to any basic geometry.

To form the glass member 5, glass melt 44 may be deposited on the metal member 3, and, preferably, also on the contact pad 37, more preferably also on the element 39 and the substrate 43. When the melt 44 cools down, it forms the glass member 5.

The glass melt 44 flowing on the metal member 3 is indicated by the dashed line in Fig. 2.

A preferred method for building the glass member 5 is to apply a mixture of glass and/or ceramic powders with an organic binder agent to provide a dispensable paste, which is applied on the metal member 3, evenly covering the electrically conductive connection member 31 and being transformed with temperature treatment into a glass member 5, glass ceramic or a glass composite, which is representing the glass member 5 later.

As mentioned above with respect to Fig. 1, the glass-forming component may be evenly distributed in the metal member 3. However, this is not mandatory.

The glass forming components 11 may be present in certain regions the metal member 3 only, in particular in the surface-near regions 13 thereof. This is due to the reason that glass-forming components 11 are needed the most in that regions which are close to the glass member 5.

Figs. 3 and 4 show cross sections of metal members 3 with different distributions of the glass-forming components 11 therein. For better visibility, the glass member 5 is only indicated by a dashed line in Figs. 3 and 4. The circular cross section of the metal member 3 is not a limitation and used hereby only for explanatory reasons.

Fig. 3 shows the cross section of a metal member 3 with a distribution of glass-forming components 11 that increases from a core region 45 towards the transition region 9, in which the metal member 3 is in contact with the glass member 5.

In said core region 45 of the metal member 3, a very small amount of or even no glass-forming components 11 may be present. Towards the transition region 9, however, the concentration of the glass-forming components 11 increases. In the surface-near region 13, the concentration of the glass-forming components 11 is sufficient to form a chemical bond with the glass member 5.

Fig. 4 depicts a metal member 3 with a step in the distribution of the glass-forming components 11.

An inner region 17 is provided with no or a neglectable amount of glass-forming components 11, i.e. less than 4 %.

However, between said inner region 17 and the interface region 9, glass-forming components 11 are present in a concentration that is sufficient to form the chemical bond with the glass member 5.

Such a distribution may, for example, be achieved by first providing a metal body 47 that contains no or a neglectable amount of glass-forming components 11. This metal body 47 forms the inner region 17.

Said metal body may be provided with a sheath or shell 49 that contains the glass-forming components 11. Just by way of example, the metal body 47 can be inserted into the sheath 49. By providing the metal body 47 with the sheath 49, the metal member 3 is formed.

In the alternative, the metal body 47 may be provided with a coating that contains the glass-forming components 11, in particular a dispersive coating. Said coating may then be regarded as the sheath 49 shown in Fig. 4.

### Reference numerals

- 1: assembly
- 3: metal member
- 5: glass member
- 7: glass-to-metal seal
- 9: transition region
- 11: glass-forming component
- 13: surface-near regions
- 15: inner region
- 17: glass
- 19: glass matrix
- 21: surface
- 23: glass structure
- 25: glass covered assembly
- 27: electrical device
- 29: lead wire
- 31: electrically conductive connection member
- 33: interface region
- 35: mechanical and electrical connection
- 37: contact pad
- 39: temperature dependent resistive element
- 40: platinum measuring structure
- 41: resistance thermometer
- 43: substrate
- 44: glass melt
- 45: core region
- 47: metal body
- 49: sheath

## Claims

1. Assembly (1) comprising a metal member (3) and a glass member (5) bonded to the metal member (3) in a glass-to-metal seal (7), wherein the metal member (3) contains at least one glass-forming component (11).

2. Assembly (1) according to claim 1, wherein the at least one glass-forming component (11) contains at least one of the following elements: silicon, germanium, phosphor, boron, arsenic, antimony.

3. Assembly (1) according to claim 1 or 2, wherein, at least in a region (13) of the metal member (3), a concentration of the glass-forming component (11) is higher than 0,4 %.

4. Assembly (1) according to any of claims 1 to 3, wherein a concentration of the at least one glass-forming component (11) in the metal member (3) increases towards a transition (9) region between the metal member (3) and the glass member (5).

5. Assembly (1) according to any of claims 1 to 4, wherein a major constituent of the at least one metal member (3) is at least one of the following: nickel, silver, platinum, aluminum, iridium, palladium, rhodium, gold, copper or an alloy, of any composition of the aforementioned materials.

6. Assembly (1) according to any of claims 1 to 5, wherein the at least one metal member (3) is a wire (29).

7. Assembly (1) according to any of claims 1 to 6, wherein a coefficient of thermal expansion of the glass member (5) differs from a coefficient of thermal expansion of the metal member (3).

8. Assembly (1) according to any of claims 1 to 7, wherein the at least one metal member (3) comprises, additionally to the at least one glass forming component (11), at least one glass stabilizer.

9. Assembly (1) according to claim 8, wherein the at least one glass stabilizer contains at least one of the following elements: calcium, strontium, barium, zirconium, iron, manganese.

10. Glass-covered assembly (25) comprising at least one electrically conductive connection member (31) and at least one assembly (1) according to any of claims 1 to 9, wherein the metal member (3) of the at least one assembly (1) is mechanically and electrically connected to the at least one electrically conductive connection member (31) at an interface region (33), and wherein the metal member (3) is covered by the glass member (5) of the at least one assembly (1) at least in the interface region (33).

11. Electrical device (27) containing at least one temperature dependent resistive element (39), the temperature dependent resistive element (39) being directly or indirectly connected to an electrically conductive connection member (31) in an electrically conductive manner, wherein at least one metal member (3) is mechanically and electrically connected to the connection member (31), the metal member (3) containing at least one glass-forming component (11) and being part of a glass-to-metal seal (7), with a glass member (5) that covers the metal member (3) and the connection member (31) at least in parts, wherein the metal member (3) and the glass member (5) are part of an assembly (1) according to any of claims 1 to 9.

12. Method for producing a glass-to-metal seal (7) between a glass member (5) and a metal member (3) comprising the steps of
- providing a metal member (3) containing glass-forming components (11), and
- depositing or applicating glass melt (44) on the metal member (3), thereby forming a chemical bond between the glass-forming components (11) in the metal member (3) and the glass member (5),
- wherein the glass member (5) is formed from the glass melt (44).

13. Method according to claim 12, comprising the step of first providing a metal body (47) that is free from glass-forming components (11) with the at least one glass-forming component (11) to form the metal member (3) before the glass-to-metal seal (7) is produced.

14. Method according to claim 12 or 13, further comprising the step of thermally treating the metal member (3) to increase a rate of oxidation of the at least one glass-forming component (11) in the metal member (3) at least near a surface (21) of the metal member (3).

15. Method according to any of claims 12 to 14, further comprising the step of forming a mechanical and electrical connection (35) between the metal member (3) and an electrically conductive connection member (31) by welding, soldering or wire-bonding before the glass-to-metal-seal (7) is produced.
